# EUROPEAN PATENT APPLICATION

(11) **EP 4 657 033 A1**
(43) Date of publication of application: **03.12.2025**
(21) Application number: 25177570.6
(22) Date of filing: 20.05.2025
(51) Int. Cl.: G01G 19/393

(54) **COMBINATION WEIGHING APPARATUS**

(30) Priority: 31.05.2024 JP 2024089046
(71) Applicant: Ishida Co., Ltd., Kyoto-shi Kyoto 606-8392 (JP)
(72) Inventor: HIRANO, Shintaro, Ritto-shi, Shiga, 520-3026 (JP); HORITANI, Yoshiki, Ritto-shi, Shiga, 520-3026 (JP)
(74) Representative: Gill Jennings & Every LLP

(57) **Abstract**

In the present invention, three hoppers having different shapes are prepared, and an outer wall of each of the hoppers is raised to form a hopper in which a conventional fence and the hopper are integrated. Both ends of a first hopper in a left-right direction along an outer wall thereof are located inside outer walls of hoppers located on both sides, respectively, and out of both ends of an outer wall of a second hopper, a right end is located inside an outer wall of a hopper adjacent on a right side, and a left end is located outside an outer wall of a hopper adjacent on a left side. Furthermore, an outer wall of a third hopper is located outside outer walls of hoppers located on both sides. This makes it possible to remove the hoppers in order while one round of an outer periphery of the hoppers is made.

## Description

### TECHNICAL FIELD

The present invention relates to a combination weighing apparatus.

### BACKGROUND ART

In a case where combination weighing is performed on an article that is easily entangled, such as "bean sprout", in order to loosen an article to be input into an apparatus, as disclosed in JP 2016-114375 A below, a radiation trough is formed into a flat shape, and an opening portion of a pool hopper that receives the articles is expanded in a reverse tapered shape in correspondence with a discharge port of the expanded trough. In addition, a fence higher than a horizontal level of the radiation trough is detachably attached to a back side of a hopper on a side facing the discharge port of the radiation trough to prevent the article from falling down from the hopper.

Since this fence is detachable, when the apparatus is cleaned, it is necessary to first remove the fences of the hoppers in order while one round of an outer periphery of the apparatus is made, and subsequently remove the hoppers in order while another round of the outer periphery of the apparatus is made. Therefore, the attaching and detaching operation of the hoppers takes time, and therefore there is a problem that workability is poor.

### SUMMARY OF THE INVENTION

In order to solve such poor workability, an object of the present invention is to provide a new combination weighing apparatus capable of removing a pool hopper from the apparatus and cleaning the apparatus only by making one round of an outer periphery of the apparatus.

A combination weighing apparatus according to an embodiment of the present invention is
a combination weighing apparatus including a plurality of hoppers arranged so as to surround an outer periphery of a plurality of radiation troughs arranged radially and each receiving an article discharged from each corresponding radiation trough, in which
the hoppers include a first hopper, a plurality of second hoppers, and a third hopper, and each of the hoppers includes a housing that temporarily stores and discharges an article supplied from the radiation trough, and
an upper opening portion located above the housing and guiding an article supplied from a corresponding radiation trough into the housing,
an outer wall higher than a height of a discharge port of the radiation trough is disposed on a side of the upper opening portion facing the discharge port of the radiation trough,
both ends of the first hopper in a left-right direction along the outer wall thereof are located inside outer walls of hoppers located on both sides, respectively,
a right end of the outer wall of the second hopper is located inside an outer wall of a hopper adjacent on a right side, while a left end thereof is located outside an outer wall of a hopper adjacent on a left side, and
the outer wall of the third hopper is located outside outer walls of hoppers located on both sides.

Each hopper in this case includes an opening and closing gate disposed in an opening portion in a lower portion of the housing, a link mechanism that opens and closes the opening and closing gate, and a hanger unit attached to the housing. Therefore, when the hopper is removed from the apparatus body, first, the hopper is inclined toward the apparatus to release engagement between a swing end of the link mechanism and an opening and closing lever on the apparatus body side, and when the hopper is pulled up in this state, the hanger unit of the hopper is removed from a support bar of the apparatus body. Therefore, the hopper can be removed from the apparatus body.

Therefore, when each hopper having the above configuration is removed from the apparatus body, first, the first hopper that can be inclined toward the apparatus without being disturbed by hoppers on both sides is inclined toward the apparatus. As a result, the engagement between the link mechanism of the first hopper and the opening and closing lever on the body side is released. Therefore, when the first hopper is lifted in this state, the hanger unit of the first hopper is separated from the support bar on the apparatus body side, and therefore the first hopper can be removed from the apparatus body.

Next, since the outer wall of the second hopper adjacent on a right side of the removed first hopper is located inside an outer wall of a second hopper adjacent on a right side of the second hopper, the second hopper adjacent on a right side of the first hopper is inclined toward the apparatus. As a result, as described above, the engagement between the link mechanism of the inclined second hopper and the opening and closing lever is released. Therefore, when the second hopper is lifted in this state, the hanger unit is separated from the support bar of the apparatus body, and the second hopper can be removed.

Similarly, when the second hopper on a right side of the removed second hopper is inclined toward the apparatus and lifted, the second hopper can be removed from the apparatus body. These operations are repeated one after another to sequentially remove the second hoppers in the counterclockwise direction. As a result, the third hopper is finally left. Therefore, when the third hopper is inclined toward the apparatus and lifted, the third hopper can be removed. As a result, removal of the hoppers from the apparatus body is completed.

When the removed hoppers are attached to the apparatus body, the hoppers are attached in the reverse order. That is, first, the hanger unit is hooked on the support bar of the apparatus body in a state where the third hopper is inclined toward the apparatus, and the third hopper is raised in this state to engage a swing end of the link mechanism with the opening and closing lever on the apparatus body side. As a result, attachment of the third hopper is completed.

Subsequently, the second hopper is disposed on a left side of the third hopper, and the second hopper is attached to the apparatus body by a similar operation. In this manner, the same second hopper is sequentially attached to a left side of the second hopper. The last remaining first hopper is disposed between the second hopper on a right and the third hopper on a left, and attached to the apparatus body by a similar operation. As a result, attachment of all the hoppers from the third hopper to the first hopper is completed.

In this embodiment, hoppers can be removed in order in the counterclockwise direction on an outer periphery of the hoppers arranged annularly, but in the clockwise direction, a hopper adjacent on a left prevents inclination of a hopper on a right side, and therefore the hopper on the right side cannot be removed.

In this case, the following embodiment can solve the problem.

That is, a combination weighing apparatus according to an embodiment of the present invention is
a combination weighing apparatus including a plurality of hoppers arranged so as to surround an outer periphery of a plurality of radiation troughs arranged radially and each receiving an article discharged from each corresponding radiation trough, in which
the hoppers include a first hopper, a plurality of second hoppers, and a third hopper, and each of the hoppers includes a housing that temporarily stores and discharges an article supplied from the radiation trough, and
an upper opening portion located above the housing and guiding an article supplied from a corresponding radiation trough into the housing,
an outer wall higher than a height of a discharge port of the radiation trough is disposed on a side of the upper opening portion facing a discharge port of a corresponding radiation trough,
both ends of the first hopper in a left-right direction along the outer wall thereof are located inside outer walls of hoppers located on both sides, respectively,
a left end of the outer wall of the second hopper is located inside an outer wall of a hopper adjacent on a left side, while a right end thereof is located outside an outer wall of a hopper adjacent on a right side, and
the outer wall of the third hopper is located outside outer walls of hoppers located on both sides.

In this case, the plurality of second hoppers are sequentially arranged on a left side of the first hopper, the third hopper is disposed on a left side of the last second hopper, and the first hopper is further disposed on a left side of the third hopper. Therefore, when the hoppers are removed from the apparatus, first, the first hopper is inclined toward the apparatus and then lifted upward and removed. Subsequently, the second hopper on a left side is inclined toward the apparatus, lifted upward, and removed. In this way, the second hoppers are sequentially removed in the clockwise direction, and then the third hopper is finally inclined toward the apparatus and lifted upward and removed. As a result, all the hoppers can be removed from the apparatus while one round of an outer periphery of the hoppers is made in the clockwise direction.

When the removed hoppers are attached to the apparatus body, the hoppers can be attached to the apparatus body by attaching the hoppers while making one round in the reverse procedure as described above.

According to a combination weighing apparatus according to an embodiment of the present invention, hoppers can be removed in order from the apparatus body while one round of an outer periphery of the apparatus is made. In addition, the removed hoppers can be attached while one round is made in the reverse direction. Therefore, since the attaching and detaching operation of the hoppers can be completed in a short time, a cleaning operation of the hoppers can be made efficient.

### BRIEF DESCRIPTION OF THE DRAWINGS

FIG. 1 is an external perspective view of an embodiment of a combination weighing apparatus according to the present invention;
FIG. 2 is a front view of an arrangement state from a first hopper to a third hopper;
FIG. 3 is an external perspective view of the first hopper;
FIG. 4 is an external perspective view of the second hopper;
FIG. 5 is an external perspective view of the third hopper;
FIG. 6 is a schematic explanatory view for explaining a problem of a conventional apparatus of Other Invention 1;
FIG. 7 is a schematic explanatory view of an embodiment of Other Invention 1;
FIG. 8 is a schematic explanatory view for explaining a problem of a conventional apparatus of Other Invention 2; and
FIG. 9 is a schematic explanatory view of an embodiment of Other Invention 2.

### DETAILED DESCRIPTION

Hereinafter, an embodiment of the present invention will be described with reference to the drawings. Note that this embodiment does not limit the technical scope of the present invention. In the description of the drawings, the same or similar parts are denoted by the same or similar reference numerals. Note that the drawings are schematic, and ratios of dimensions and the like are different from actual ones. In the present specification and the drawings, elements having substantially the same function and configuration are denoted by the same reference numerals, and elements not directly related to the present invention are not illustrated.

### <Outline of Configuration of Present Invention>

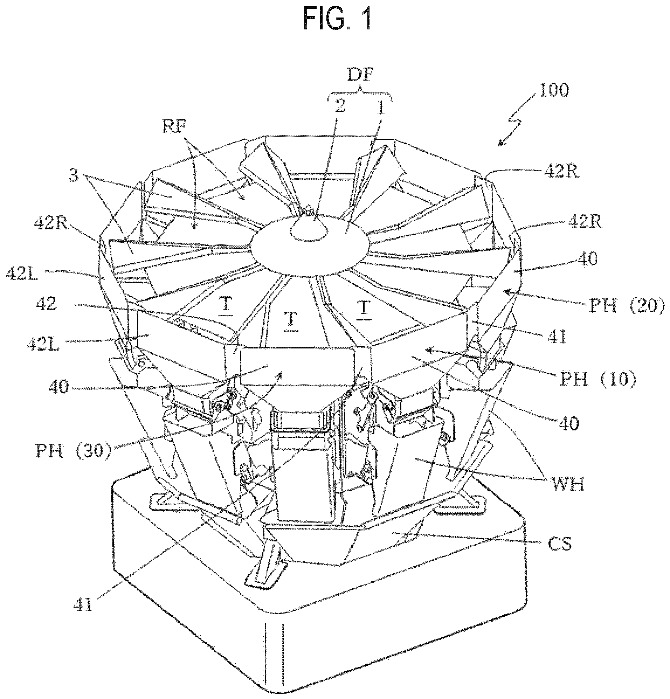

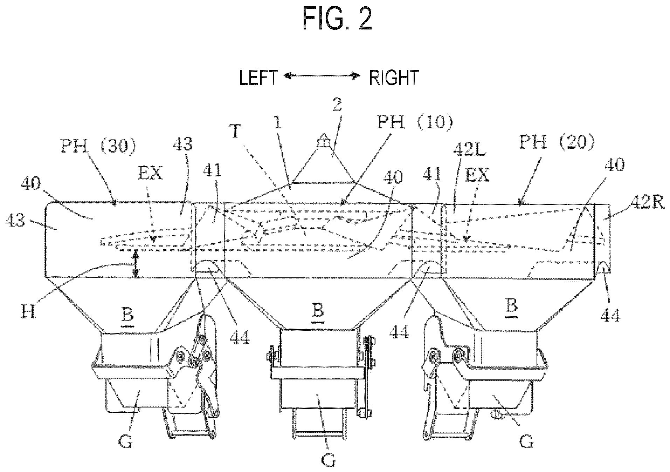

FIG. 1 is an external perspective view of a combination weighing apparatus 100 according to an embodiment, and FIG. 2 is a front view illustrating an arrangement configuration of a first hopper 10, a second hopper 20, and a third hopper 30. In these drawings, the combination weighing apparatus 100 includes a dispersion feeder DF located in a central upper portion of the apparatus, a plurality of radiation feeders RF arranged radially around the dispersion feeder DF, a plurality of pool hoppers PH arranged annularly on an outer periphery of the radiation feeders RF, weighing hoppers WH arranged below the pool hoppers PH so as to correspond to the pool hoppers PH, the number of the weighing hoppers WH being the same as the number of the pool hoppers PH, and a collection chute CS disposed below the weighing hoppers WH.

Note that, in the following description, the pool hopper PH may be simply referred to as a "hopper".

The dispersion feeder DF disperses and supplies an article such as "bean sprout" input from above the apparatus to surroundings, and includes a conical dispersion table 1 supported by an electromagnetic vibrator (not illustrated) and a conical protrusion 2 attached to a central upper portion of the dispersion table 1. The dispersion table 1 and the protrusion 2 act to disperse the article to the surrounding radiation feeder RF while loosening the article input from above by a spiral reciprocating motion of the electromagnetic vibrator.

The radiation feeder RF includes a radiation trough T formed in a flat fan shape and an electromagnetic vibrator (not illustrated) that vibrates the radiation trough T in an obliquely vertical direction along a radiation direction. On a right side edge of each radiation trough T, a distribution cover 3 such as a triangular roof covering a left side edge of an adjacent right trough T is disposed. The distribution cover 3 extends so as to cover a gap between the adjacent pool hoppers PH, and is formed so as to be inclined upward as it approaches the pool hopper PH. As a result, the article straddling the distribution cover 3 falls into an opening portion OP of any one of the pool hoppers PH by the upward inclination.

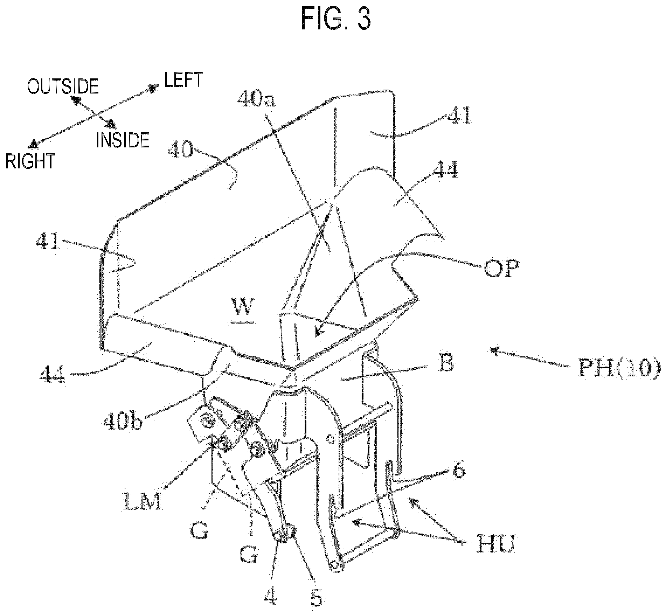

The pool hopper PH includes the first hopper 10, the second hopper 20, and the third hopper 30 having different shapes of outer walls 40, and the hoppers 10, 20, and 30 are arranged annularly on an outer periphery of the radiation troughs T. As illustrated in FIGS. 3 to 5, each of the hoppers 10, 20, and 30 includes a housing B that temporarily stores and discharges an article supplied from the radiation trough T, an inverted quadrangular pyramid-shaped upper opening portion OP that is located above the housing B and guides the article supplied from the radiation trough T into the housing B, an opening and closing gate G disposed in a lower opening portion, a link mechanism LM that opens and closes the opening and closing gate G, and a hanger unit HU that hooks and attaches the hoppers 10, 20, and 30 to a horizontal support bar (not illustrated) of an apparatus body.

Above a side wall W on a side facing a discharge port EX of the radiation trough T among four side walls W constituting the housing B of each of the hoppers 10, 20, and 30, the outer wall 40 having a height higher than a height H of the discharge port EX of the radiation trough T is disposed.

In FIG. 2, both ends 41 of the outer wall 40 of the first hopper 10 in a left-right direction are located inside the outer walls 40 of the second hopper 20 and the third hopper 30 located on both sides, respectively. Specifically, as illustrated in FIGS. 1 and 3, both ends 41 of the first hopper 10 in the left-right direction are bent inward so as not to interfere with the outer walls 40 of the second hopper 20 and the third hopper 30 on both sides.

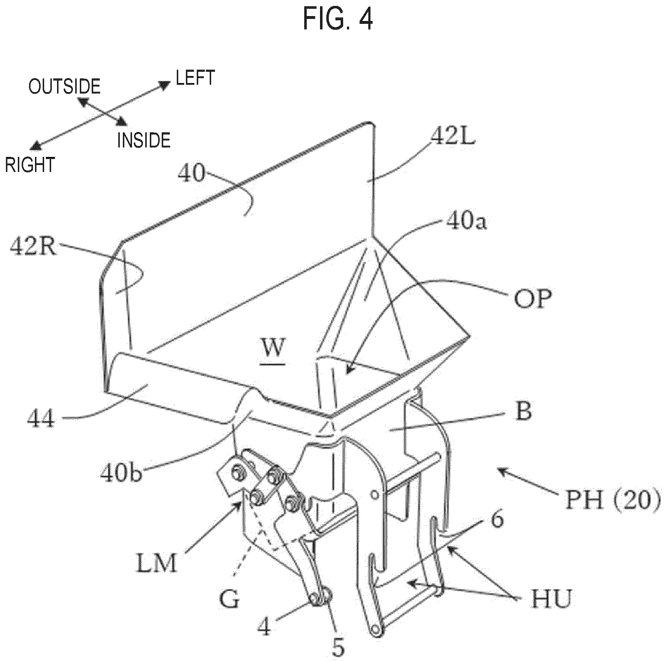

A right end 42R of the outer wall 40 of the second hopper 20 is located inside the outer wall 40 of the hopper 20 adjacent on a right side. Specifically, as illustrated in FIGS. 1 and 4, the right end 42R of the outer wall 40 of the second hopper 20 is bent inward so as not to interfere with a left end of the outer wall 40 of a second hopper 20 adjacent on a right side or the third hopper 30 in FIG. 1.

On the other hand, a left end 42L of the outer wall 40 of the second hopper 20 is located outside the outer wall 40 of the first hopper 10 adjacent on a left side of the left end 42L. In addition as illustrated in FIG. 1, since the same second hopper 20 is further sequentially disposed on a right side of the second hopper 20, the left end 42L of the outer wall 40 of a second hopper adjacent on a right side of one second hopper 20 is located outside the right end 42R of the second hopper 20 located on a left side of the left end 42L.
Specifically, as illustrated in FIG. 4, the left end 42L is formed in a flat shape without being bent inward.

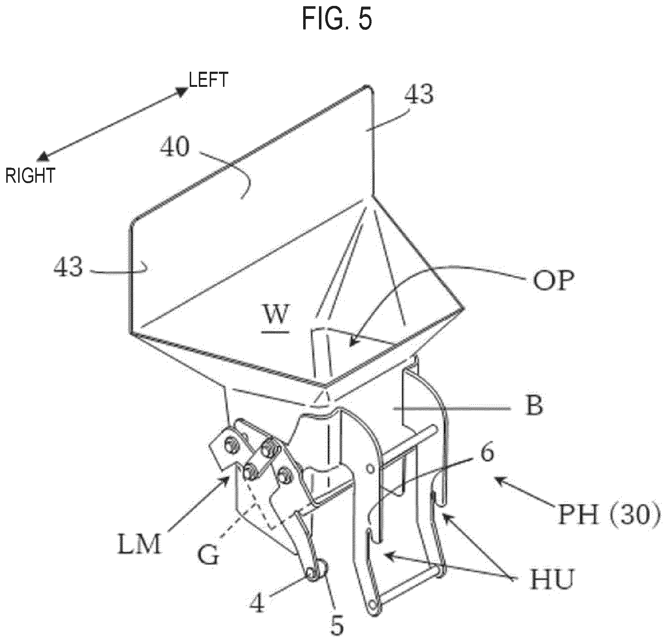

In FIGS. 1 and 5, both ends 43 of the outer wall 40 of the third hopper 30 are located outside the outer walls 40 of the first hopper 10 and the second hopper 20 located on both sides, respectively. Specifically, as illustrated in FIG. 5, both ends 43 of the outer wall 40 of the third hopper 30 are not bent inward and remain flat.

In the first hopper 10 of FIGS. 2 and 3, upper ends of two opposing side walls 40a and 40b in a direction intersecting with the outer wall 40 are curved in an arch shape toward the outside, and the arch portion 44 overlaps upper ends of the side walls 40a and 40b of the adjacent second hopper 20 or third hopper 30. As a result, a gap generated between the hoppers PH is covered with the arch portion 44.

In the second hopper 20 of FIGS. 2 and 4, an upper end of the right outer wall 40b out of the two opposing side walls 40a and 40b in a direction intersecting with the outer wall 40 is also curved in an arch shape toward the outside, and the arch portion 44 overlaps an upper end of the side wall 40a of the adjacent second hopper 20 or third hopper 30. As a result, a gap generated between the hoppers PH is covered with the arch portion 44, and an article is prevented from falling from the gap.

Note that each of these hoppers PH includes the opening and closing gate G, the link mechanism LM, and the hanger unit HU. In addition, a roller 5 is attached to a swing end 4 of the link mechanism LM, and the roller 5 engages with a swing opening and closing lever on an apparatus body side. Therefore, in a state where the hopper PH is inclined toward the apparatus, a hook 6 of the hanger unit HU is hooked on a support bar on the apparatus body side, and the roller 5 is engaged with the opening and closing lever while the hopper PH is raised, whereby attachment of the hopper PH is completed. Conversely, when the hopper PH is inclined toward the apparatus, the roller 5 is separated from the opening and closing lever, and when the hopper PH is lifted in this state, the hook 6 is separated from the support bar and can be removed.

Therefore, when the hoppers PH are removed, in FIG. 1, first, the first hopper 10 in which both ends 41 of the outer wall 40 in the left-right direction are located inside the outer walls 40 of the hoppers PH on both sides is inclined inward. As a result, the roller 5 of the first hopper 10 is separated from the opening and closing lever of the apparatus body. Therefore, when the first hopper 10 is lifted in this state, the hook 6 of the hanger unit HU is separated from the support bar, and the hopper PH can be removed.

Subsequently, when the second hopper 20 adjacent on a right side of the removed first hopper 10 is inclined toward the apparatus, the roller 5 of the second hopper 20 is separated from the opening and closing lever, and when the inclined second hopper 20 is lifted in this state, the hook 6 is separated from the support bar, and the hopper PH can be removed.

In this way, the second hoppers 20 are sequentially removed counterclockwise, and finally, when the third hopper 30 is inclined toward the apparatus and lifted, removal of all the hoppers PH is completed.

When the hoppers PH are attached to the apparatus body, first, the third hopper 30 is attached, then the plurality of second hoppers 20 are sequentially attached in the clockwise direction, and finally, when the first hopper 10 is attached, whereby the attachment of all the hoppers PH is completed.

### <Outline of Second Embodiment>

The above embodiment is an aspect in which the hoppers PH are sequentially removed while one round of the outer periphery of the hoppers PH is made in the counterclockwise direction. However, when the hoppers PH are removed while one round of the outer periphery of the hoppers PH is made in the clockwise direction, the first hopper 10 and the third hopper 30 have the same configurations as those in the above embodiment, and only the outer wall 40 of the second hopper 20 has a symmetrically opposite configuration. Specifically, a left end 42L of the outer wall 40 of the second hopper 20 is bent inward to form an arch portion 44 therein. In addition, a right end 42R of the outer wall 40 of the second hopper 20 remains flat, and the arch portion 44 is not formed therein.

In addition, an arrangement is different from the arrangement in FIGS. 1 and 2. Specifically, the third hopper 30 is disposed on a right side of the first hopper 10, and the second hoppers 20 are sequentially disposed on a left side of the first hopper 10. With such an arrangement, a right end 41 of the first hopper 10 is located inside an outer wall 40 of the third hopper 30, and a left end 41 of the first hopper 10 is located inside an outer wall 40 of the second hopper 20. Therefore, when the first hopper 10 is inclined toward the apparatus and lifted upward, the first hopper 10 can be removed.

In addition, since the same second hopper 20 is disposed on a left side of the second hopper 20, the left end 42L of the second hopper 20 is located inside the right end 42R of the second hopper 20 on a left side of the left end 42L. Therefore, when the hopper PH adjacent on a right side of the second hopper 20 is removed, there is no obstacle on the right side of the second hopper 20, and therefore the second hopper 20 is inclined toward the apparatus and can be removed. As a result, first, the first hopper 10 is removed, next the second hoppers 20 are sequentially removed in the clockwise direction, and finally the third hopper 30 can be removed.

When the removed hoppers PH are attached to the apparatus, the hoppers PH are attached in the counterclockwise direction. That is, first, the third hopper 30 is attached, next, the second hoppers are sequentially attached in the counterclockwise direction, and finally, the first hopper 10 is attached. As a result, the attaching and detaching operation of the hoppers PH can be completed in a short time.

### <Other Invention 1>

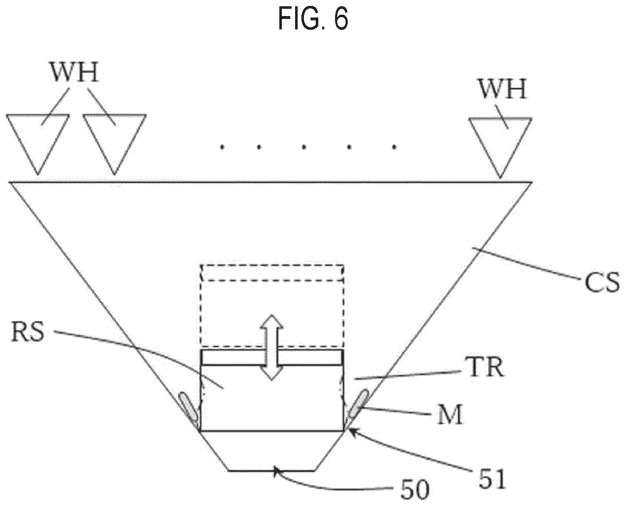

FIG. 6 is an explanatory diagram of a combination weighing apparatus in which a ring shutter RS is disposed in an inverted cone-shaped collection chute CS. The ring shutter RS temporarily blocks an article M discharged from a weighing hopper WH, and then, when there is a discharge request from a lower packaging apparatus, the ring shutter RS is pulled up to discharge the blocked article M at one time. Therefore, for example, the ring shutter RS moves up and down a ring-shaped flexible member made of a polyurethane sheet or the like with a lifting mechanism.

However, when the ring shutter RS descends and comes into contact with the collection chute CS, the ring-shaped flexible member slightly bulges outward. Therefore, a gap between the bulged member and the collection chute CS is narrowed. In a case where the falling article M is pinched in the gap, when the ring shutter RS rises, the article M thereby jumps up, and there occurs a deviation of a discharge timing of the article M to the packaging apparatus, which causes a problem that the article is caught in a seal portion of a bag.

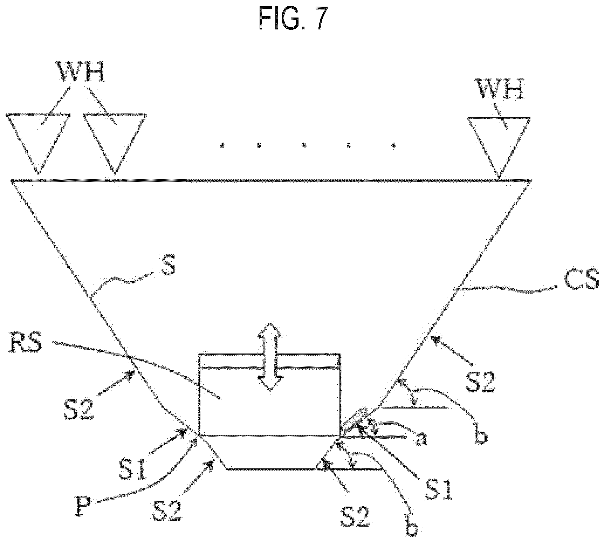

Therefore, as illustrated in FIG. 7, Invention 1 is a combination weighing apparatus including:
a collection chute CS that collects an article M discharged from a plurality of hoppers WH on an inclined surface S having an inverted truncated cone shape and discharges the article M; and
a ring-shaped shutter RS that moves up and down between a position P in contact with the inclined surface S and a position away from the inclined surface S in the collection chute CS, in which
an inclination angle a of a first inclined surface S1 at the position P of the inclined surface S in contact with the shutter RS is gentler than an inclination angle b of a second inclined surface S2 vertically continuing from the first inclined surface S1.

As described above, since the inclination angle a of the first inclined surface S1 when the ring shutter RS is in contact with the inclined surface S is gentler than the inclination angle b of the other second inclined surface S2, an angle at which the article M is sandwiched between the shutter RS and the chute CS increases. As a result, it is possible to suppress jumping up of the article M when the ring shutter RS rises.

### <Other Invention 2>

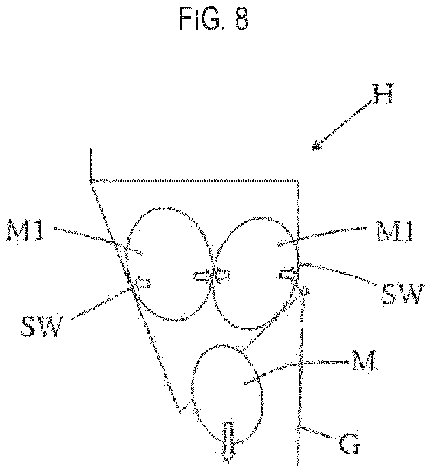

For example, when combination weighing to a target weight (2 kg) is performed on chicken breast (product) having a single weight of 200 g to 300 g, a hopper having a large capacity is used. However, in a conventional hopper, as illustrated in FIG. 8, when a plurality of products M and M1 are simultaneously supplied to a hopper H, the plurality of products M1 sandwiched by side surface SW of the hopper H are pressed against each other, and thus there is a problem that the pressed products M1 are not discharged even if an opening and closing gate G of the hopper H is opened.

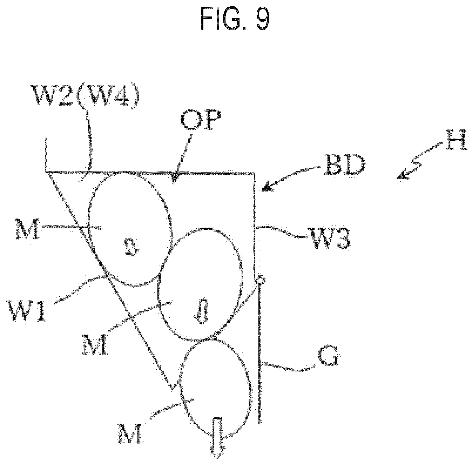

The present invention is intended to solve such a problem, and is
a hopper H including an opening portion OP that receives an article M to be supplied in an upper portion and an opening and closing gate G that discharges the article M in a lower portion in FIG. 9, in which
a hopper body BD forming the opening portion OP includes four side surfaces W1 to W4, one side surface W1 is formed as an inclined surface on which the article M slides down, and the other three side surfaces W2 to W4 are formed as substantially vertical side surfaces, and
the hopper body BD surrounded by the inclined surface W1 and the other three side surfaces W2 to W4 is designed to have a size in which the plurality of articles M are not arranged side by side but vertically overlap each other.

As a result, the plurality of articles M supplied to the hopper H are stored in a vertically overlapped state without being pressed in a lateral direction. Therefore, when the lower opening and closing gate G is opened, the vertically overlapped articles M are discharged in order from a bottom. Therefore, clogging of the article M can be suppressed.

### REFERENCE SIGNS LIST

- RF: Radiation feeder
- PH: Pool hopper
- 10: First hopper
- 20: Second hopper
- 30: Third hopper
- B: Housing
- OP: Upper opening portion
- EX: Discharge port
- 40: Outer wall
- 41: Both ends in a left-right direction
- 42R: Right end
- 42L: Left end
- 100: Combination weighing apparatus

## Claims

1. A combination weighing apparatus comprising a plurality of hoppers arranged so as to surround an outer periphery of a plurality of radiation troughs arranged radially and each receiving an article discharged from each of the radiation troughs, wherein
the hoppers include a first hopper, a plurality of second hoppers, and a third hopper,
each of the hoppers includes:
a housing that temporarily stores and discharges an article supplied from the radiation trough, and
an upper opening portion located above the housing and guiding an article supplied from the radiation trough into the housing,
an outer wall higher than a height of a discharge port of the radiation trough is disposed on a side of the upper opening portion facing the discharge port of the radiation trough,
both ends of the first hopper in a left-right direction along the outer wall thereof are located inside outer walls of hoppers on both sides, respectively,
a right end of the outer wall of the second hopper is located inside an outer wall of a hopper adjacent on a right side, while a left end thereof is located outside an outer wall of a hopper adjacent on a left side, and
the outer wall of the third hopper is located outside outer walls of hoppers on both sides.

2. A combination weighing apparatus comprising a plurality of hoppers arranged so as to surround an outer periphery of a plurality of radiation troughs arranged radially and each receiving an article discharged from each of the radiation troughs, wherein
the hoppers include a first hopper, a plurality of second hoppers, and a third hopper,
each of the hoppers includes:
a housing that temporarily stores and discharges an article supplied from the radiation trough, and
an upper opening portion located above the housing and guiding an article supplied from the radiation trough into the housing,
an outer wall higher than a height of a discharge port of the radiation trough is disposed on a side of the upper opening portion facing the discharge port of the radiation trough,
both ends of the first hopper in a left-right direction along the outer wall thereof are located inside outer walls of hoppers on both sides, respectively,
a left end of the outer wall of the second hopper is located inside an outer wall of a hopper adjacent on a left side, while a right end thereof is located outside an outer wall of a hopper adjacent on a right side, and
the outer wall of the third hopper is located outside outer walls of hoppers on both sides.
